# FASCICULE DE BREVET EUROPEEN

(11) **EP 3 266 639 B1**
(45) Date de publication et mention de la délivrance du brevet: **25.11.2020**
(21) Numéro de dépôt: 17177700.6
(22) Date de dépôt: 23.06.2017
(51) Int. Cl.: B60K 37/00, B62D 1/18, B60R 13/02

(54) **DISPOSITIF D'HABILLAGE D'UNE PARTIE DE PLANCHE DE BORD D'UN VEHICULE AUTOMOBILE**
VERKLEIDUNGSVORRICHTUNG FÜR EINEN TEIL DES ARMATURENBRETTS EINES KRAFTFAHRZEUGS
DEVICE FOR COVERING A DASHBOARD PART OF A MOTOR VEHICLE

(30) Priorité: 04.07.2016 FR 1656371
(43) Date de publication de la demande: 10.01.2018
(73) Titulaire: RENAULT s.a.s., 92100 Boulogne-Billancourt (FR)
(72) Inventeur: JULIEN, GILLON, 78650 BEYNES (FR); LAURENT, PERRIN, 78000 VERSAILLES (FR)

(56) Documents cités:
- DE-A1-102005 010 862
- DE-C1- 3 918 253
- DE-U1- 20 017 192
- DE-U1- 29 809 713

## Description

### Domaine de l'invention :

La présente invention concerne un dispositif d'habillage d'une partie de planche de bord d'un véhicule automobile. L'invention se rapporte plus particulièrement à un dispositif d'habillage d'une partie supérieure de planche de bord située à l'avant d'un volant de direction du véhicule, constitué d'un voile flexible généralement appelé TEP adapté à compenser des variations de positions du volant de direction relativement à une zone fixe de la planche de bord. On appelle également ce voile flexible « soufflet de la coquille sous volant » ou « soufflet d'habillage de coquille sous volant »

### Etat de la technique :

Des voiles flexibles selon le préambule ci-dessus servent à dissimuler des zones de jonction entre des parties mobiles telles que le volant de direction et ses habillages adjacents, et des parties fixes de la planche de bord du véhicule. Ces voiles permettent par leur souplesse et leur déformation de s'adapter à des variations de positions du volant de direction, en fonction du réglage choisi. Le voile n'est donc pas mis en tension hormis lorsque le volant est réglé dans la position la plus éloignée de l'avant du véhicule. Un inconvénient des voiles flexibles ou TEP connus est qu'ils se déforment et se plient de façon aléatoire et non maîtrisée. L'aspect chiffonné ou froissé de ce voile est fortement préjudiciable à la qualité perçue. Un tel dispositif d'habillage d'une partie de planche de bord d'un véhicule automobile est connu du document DE 10 2005 010862 A1.

### But de l'invention :

L'invention a pour but de pallier tout ou partie des inconvénients précédents en proposant un voile flexible ou TEP dont la déformation est imposée et maitrisée afin d'améliorer la qualité perçue.

### Objet de l'invention :

A cet effet, l'invention a pour objet un dispositif d'habillage d'une partie de planche de bord d'un véhicule automobile, située à l'avant d'un volant de direction du véhicule, constituée d'un voile flexible ou TEP adapté à compenser des variations de positions du volant de direction relativement à une zone fixe de la planche de bord, notamment suivant une direction longitudinale du véhicule, caractérisé en ce que le voile flexible comprend au moins un pli de rigidification ayant la forme générale d'un bourrelet s'étendant suivant une direction transversale au véhicule, chaque pli étant conformé et maintenu par une ligne de couture à la base du pli.

Le pli crée une zone de rigidification locale résultant de la structure mécanique même du voile, sans ajout impératif de pièce supplémentaire. Le dispositif d'habillage selon l'invention est de ce fait autoporteur. Sa structure et son aspect sont mieux tendus ce qui limite ou supprime d'aspect chiffonné ou froissé.

Selon d'autres caractéristiques avantageuses de l'invention :
- chaque pli est vide ;
- chaque pli comporte un fil, notamment en nylon, inséré dans l'espace intérieur délimité par le pli ;
- le voile comporte deux plis, répartis respectivement sur une zone supérieure et une zone inférieure du voile, ces zones se rejoignant en formant un coude dans une région avant ;
- les deux plis sont agencés de façon à s'étendant dans des directions opposées l'un à l'autre, respectivement vers le haut et vers le bas.

L'invention a également pour objet une planche de bord d'un véhicule automobile, caractérisé en ce qu'elle comprend un dispositif d'habillage ayant tout ou partie des caractéristiques précédentes.

L'invention a également pour objet un véhicule automobile comprenant une planche de bord ayant les caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente une vue en perspective locale d'un dispositif d'habillage de planche de bord d'un véhicule de l'état de la technique,
- la figure 2 représente une vue en perspective locale d'un dispositif d'habillage de planche de bord d'un véhicule suivant l'invention,
- la figure 3 est une vue en perspective d'un voile flexible du dispositif d'habillage suivant un premier mode de réalisation de l'invention de la figure 2,
- la figure 4 est une vue suivant la ligne de coupe A-A de la figure 3 du voile flexible,
- la figure 5 est une vue locale en perspective du voile flexible du dispositif d'habillage de la figure 2,
- la figure 6 est une vue en perspective d'un voile flexible du dispositif d'habillage suivant un second mode de réalisation de l'invention de la figure 2, et
- la figure 7 est une vue suivant la ligne de coupe A-A de la figure 6 du voile flexible.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.
Les notions avant-arrière s'entendent par rapport au sens de marche normal du véhicule qui est dirigé vers l'avant.
Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement verticale est admis dans le cadre de l'invention.

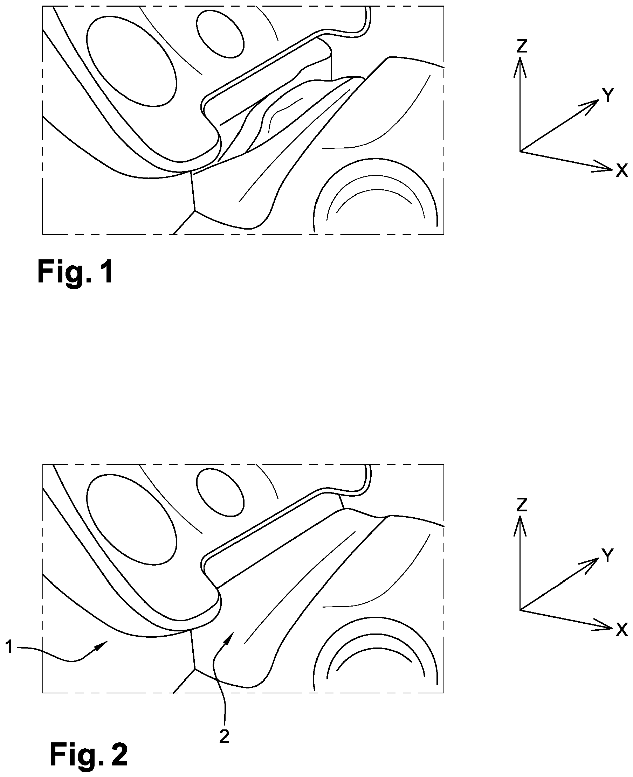

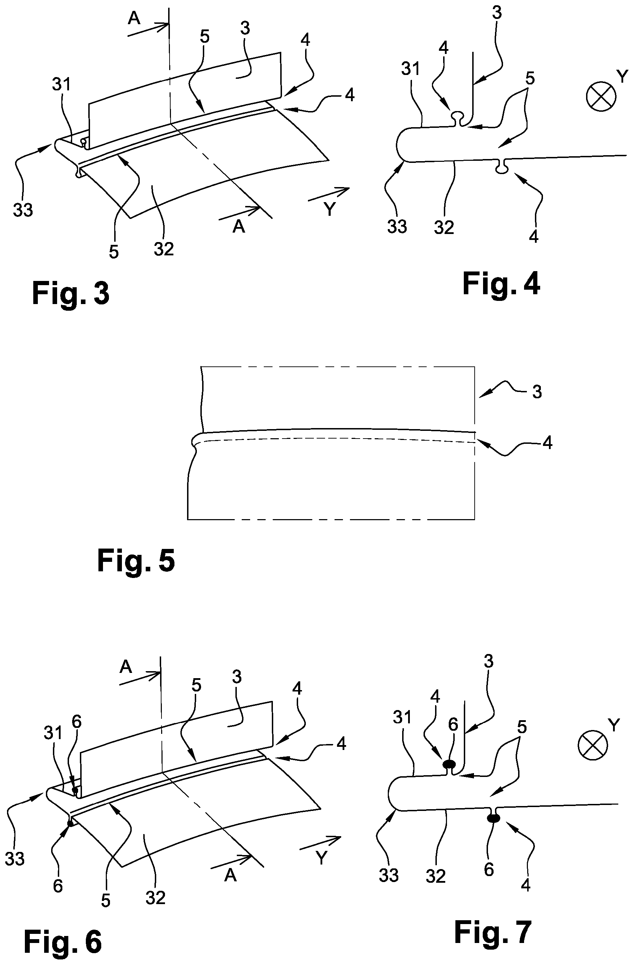

On a représenté à la figure 1 un dispositif d'habillage d'une partie de planche de bord d'un véhicule automobile de l'art antérieur, située à l'avant d'un volant de direction (non représenté) du véhicule. Cette figure illustre l'effet de chiffonnage du dispositif d'habillage que l'invention se propose de supprimer. La figure 2 illustre la même zone de planche de bord 1 d'un véhicule automobile, sur laquelle est prévu un dispositif d'habillage 2 selon l'invention. Ce dispositif d'habillage est constitué d'un voile flexible 3 adapté à compenser des variations de positions du volant de direction (non représenté mais situé dans une région droite de la figure 2) relativement à une zone fixe de la planche de bord 1. Les variations de positions du volant de direction sont ici considérées essentiellement suivant la direction longitudinale X du véhicule. Ces variations de positions du volant ont également une composante, généralement moins importante, suivant la direction verticale Z. Les variations de positions du volant sont typiquement suivant la direction longitudinale de la colonne de direction du véhicule.
Le voile flexible 3 comprend au moins un pli 4 de rigidification (figures 3-7) ayant la forme générale d'un bourrelet s'étendant suivant une direction transversale Y au véhicule. La direction du pli est en effet essentiellement suivant la direction longitudinale Y du véhicule, dans une région centrale du voile 3. Les parties latérales du voile peuvent également comprendre, de façon facultative, des plis de rigidification latéraux ou des zones d'extrémité d'un même pli de rigidification qui va d'un côté à un autre du dispositif d'habillage avec des parties recourbées s'étendant vers le bas (non représenté).
Chaque pli 4 est conformé et maintenu par une ligne de couture 5 à la base du pli 4.
Selon un premier mode de réalisation de l'invention représenté aux figures 3 et 4, chaque pli est vide. La structure mécanique de chaque pli 4 est de ce fait autosuffisante pour constituer une arête de rigidification dans le corps même du voile flexible.

Selon un second mode de réalisation de l'invention illustré aux figures 6 et 7, chaque pli 4 renferme un fil 6 (ou une baguette) rigide ou semi rigide. Un tel fil 6 peut être déformable à la flexion. Ce fil 6 est inséré dans l'espace intérieur délimité par le pli, c'est-à-dire dans la boucle que définit chaque section transversale du pli. Ce fil 6 est typiquement en nylon ou équivalent. Son diamètre est de l'ordre de 0,5 à 2 mm. Le fil 6 contribue à la formation régulière du bourrelet et à la rigidité du pli 4 qui le renferme. Le fil 6 est maintenu dans l'espace intérieur du pli 4 par la ligne de couture 5.
Comme illustré aux figures 3-4 et 6-7, le voile 3 comporte typiquement deux plis 6, répartis respectivement sur une zone supérieure 31 et une zone inférieure 32 du voile 3. Ces zones 31 ; 32 se rejoignent en formant un coude 33 dans une région avant.
Les deux plis 6 sont agencés de façon à s'étendant dans des directions opposées l'un à l'autre, respectivement vers le haut et vers le bas.

Bien entendu, l'invention n'est pas limitée aux modes ou variantes de réalisation décrits précédemment et comprends tous les équivalents techniques de ces moyens.

## Revendications

1. Dispositif d'habillage (2) d'une partie de planche de bord (1) d'un véhicule automobile, située à l'avant d'un volant de direction du véhicule, constitué d'un voile (3) flexible adapté à compenser des variations de positions du volant de direction relativement à une zone fixe de la planche de bord (1), notamment suivant une direction longitudinale (X) du véhicule, le voile (3) flexible comprenant au moins un pli (4) de rigidification ayant la forme générale d'un bourrelet s'étendant suivant une direction transversale (Y) au véhicule, **caractérisé en ce que** chaque pli (4) est conformé et maintenu par une ligne de couture (5) à la base du pli (4).

2. Dispositif d'habillage (2) selon la revendication 1, **caractérisé en ce que** chaque pli (4) est vide.

3. Dispositif d'habillage (2) selon la revendication 1, **caractérisé en ce que** chaque pli (4) comporte un fil (6), notamment en nylon, inséré dans l'espace intérieur délimité par le pli (4).

4. Dispositif d'habillage (2) selon l'une quelconque des revendications précédentes, **caractérisé en ce que** le voile (3) comporte deux plis (4), répartis respectivement sur une zone supérieure (31) et une zone inférieure (32) du voile (3), ces zones (31 ; 32) se rejoignant en formant un coude (33) dans une région avant.

5. Dispositif d'habillage (2) selon la revendication 4, **caractérisé en ce que** les deux plis (4) sont agencés de façon à s'étendant dans des directions opposées l'un à l'autre, respectivement vers le haut et vers le bas.

6. Planche de bord d'un véhicule automobile, **caractérisé en ce qu'**elle comprend un dispositif d'habillage (2) selon l'une quelconque des revendications précédentes.

7. Véhicule automobile **caractérisé en ce qu'**il comprend une planche de bord selon la revendication 6.

## Patentansprüche

1. Verkleidungsvorrichtung (2) für einen Teil des Armaturenbretts (1) eines Kraftfahrzeugs, der sich vor einem Lenkrad des Fahrzeugs befindet, bestehend aus einer flexiblen Hülle (3), die dazu eingerichtet ist, Änderungen von Positionen des Lenkrads in Bezug auf einen festen Bereich des Armaturenbretts (1), insbesondere in einer Längsrichtung (X) des Fahrzeugs, zu kompensieren, wobei die flexible Hülle (3) wenigstens eine Versteifungsfalte (4) umfasst, welche die allgemeine Form eines Wulstes aufweist, der sich in einer Richtung (Y) quer zum Fahrzeug erstreckt, **dadurch gekennzeichnet, dass** jede Falte (4) von einer Nahtlinie (5) am Grund der Falte (4) geformt und gehalten wird.

2. Verkleidungsvorrichtung (2) nach Anspruch 1, **dadurch gekennzeichnet, dass** jede Falte (4) leer ist.

3. Verkleidungsvorrichtung (2) nach Anspruch 1, **dadurch gekennzeichnet, dass** jede Falte (4) einen Faden (6), insbesondere aus Nylon, aufweist, der in den von der Falte (4) begrenzten inneren Raum eingefügt ist.

4. Verkleidungsvorrichtung (2) nach einem der vorhergehenden Ansprüche, **dadurch gekennzeichnet, dass** die Hülle (3) zwei Falten (4) aufweist, die auf einen oberen Bereich (31) bzw. einen unteren Bereich (32) der Hülle (3) verteilt sind, wobei diese Bereiche (31; 32) in einer vorderen Region zusammentreffen und dabei eine Biegung (33) bilden.

5. Verkleidungsvorrichtung (2) nach Anspruch 4, **dadurch gekennzeichnet, dass** die zwei Falten (4) so angeordnet sind, dass sie sich in zueinander entgegengesetzten Richtungen erstrecken, nach oben bzw. nach unten.

6. Armaturenbrett eines Kraftfahrzeugs, **dadurch gekennzeichnet, dass** es eine Verkleidungsvorrichtung (2) nach einem der vorhergehenden Ansprüche umfasst.

7. Kraftfahrzeug, **dadurch gekennzeichnet, dass** es ein Armaturenbrett nach Anspruch 6 umfasst.

## Claims

1. Trim device (2) for a part of a dashboard (1) of a motor vehicle, located in front of a steering wheel of the vehicle, consisting of a flexible web (3) that is designed to compensate for variations in the position of the steering wheel relative to a fixed region of the dashboard (1), in particular in a longitudinal direction (X) of the vehicle, the flexible web (3) comprising at least one stiffening fold (4) in the general form of a bead extending in a direction (Y) transverse to the vehicle, **characterized in that** each fold (4) is shaped and held by a stitched line (5) at the base of the fold (4) .

2. Trim device (2) according to Claim 1, **characterized in that** each fold (4) is empty.

3. Trim device (2) according to Claim 1, **characterized in that** each fold (4) comprises a wire (6), in particular made of nylon, inserted into the internal space delimited by the fold (4).

4. Trim device (2) according to any one of the preceding claims, **characterized in that** the web (3) comprises two folds (4), respectively distributed over an upper region (31) and a lower region (32) of the web (3), these regions (31; 32) meeting so as to form a bend (33) in a front region.

5. Trim device (2) according to Claim 4, **characterized in that** the two folds (4) are arranged so as to extend in opposite directions from one another, respectively upwards and downwards.

6. Dashboard for a motor vehicle, **characterized in that** it comprises a trim device (2) according to any one of the preceding claims.

7. Motor vehicle, **characterized in that** it comprises a dashboard according to Claim 6.
